# FASCICULE DE BREVET EUROPEEN

(11) **EP 3 665 605 B1**
(45) Date de publication et mention de la délivrance du brevet: **10.09.2025**
(21) Numéro de dépôt: 18749409.1
(22) Date de dépôt: 09.08.2018
(51) Int. Cl.: G06F 21/60, G06Q 20/32, G06Q 20/34, H04L 9/08, H04W 12/04, H04W 12/06

(54) **PROCÉDÉS ET DISPOSITIFS DE SÉCURISATION DE TRANSMISSION DE DONNÉES ENTRE UN TERMINAL ET UN LECTEUR DE CARTES, ET PRODUITS PROGRAMME D'ORDINATEUR CORRESPONDANTS.**
VERFAHREN UND VORRICHTUNGEN ZUR SICHEREN ÜBERTRAGUNG VON DATEN ZWISCHEN EINEM ENDGERÄT UND EINEM KARTENLESER UND ENTSPRECHENDE COMPUTERPROGRAMMPRODUKTE
METHODS AND DEVICES FOR THE SECURE TRANSMISSION OF DATA BETWEEN A TERMINAL AND A CARD READER, AND CORRESPONDING COMPUTER PROGRAM PRODUCTS

(30) Priorité: 10.08.2017 FR 1757645
(43) Date de publication de la demande: 17.06.2020
(73) Titulaire: Banks and Acquirers International Holding, 75015 Paris (FR)
(72) Inventeur: QUENTIN, Pierre, 95880 Enghien Les Bains (FR); SYLLA, Mamoudou, 75015 Paris (FR)
(74) Mandataire: Germain Maureau
(86) Numéro de dépôt international: PCT/EP2018/071698
(87) Numéro de publication internationale: WO 2019/030356

(56) Documents cités:
- EP-A1- 2 874 421
- US-A1- 2013 119 130
- US-A1- 2013 328 801

## Description

### 1 DOMAINE TECHNIQUE

Le domaine de l'invention est celui du traitement de données transactionnelles mises en œuvre notamment dans le cadre d'une opération de paiement.

L'invention se rapporte plus particulièrement à la sécurisation de la transmission de données transactionnelles (par exemple un code PIN (pour « Personal Identification Number » en anglais)) dans le cadre d'une transaction, notamment une transaction de paiement, menée conjointement par un terminal de communication permettant la saisie de données et par un lecteur de cartes, notamment un lecteur de cartes bancaires, connecté à ce terminal de communication.

L'invention a de nombreuses applications, notamment mais non exclusivement dans les domaines marchands impliquant un paiement en situation de mobilité pour lequel un appairage entre un lecteur de cartes bancaires (ou terminal de paiement) et un terminal de communication est d'intérêt.

### 2 ARRIERE-PLAN TECHNOLOGIQUE

Le paiement en situation de mobilité est un enjeu majeur de développement économique.

Plus particulièrement, il existe un nombre grandissant de situations dans lesquelles un professionnel a besoin de pouvoir assurer une transaction de paiement (par exemple un paiement par carte bancaire) dans une situation de mobilité. Une telle situation se rencontre par exemple pour les professionnels qui sont en déplacement constant pour leur activité professionnelle : professionnels libéraux, chauffeurs privés, etc.

De tels professionnels notamment, que nous appelons par la suite commerçants au sens large, ont besoin de recevoir des paiements de la part de leurs clients mais n'ont pas nécessairement la possibilité de s'équiper d'un terminal de paiement autonome ayant des capacités de fonctionnement nomades pour recevoir de tels paiements (par exemple à cause du prix de tels terminaux).

Pour cette raison, des solutions alternatives ont été développées. C'est par exemple le cas des solutions proposées par la société Square^{™}. Il est ainsi proposé un lecteur de cartes bancaire qui vient se brancher sur la prise jack d'un terminal de communications. Un tel lecteur de cartes bancaires est par exemple présenté dans le document de brevet US9324100. Ce document de brevet décrit plus particulièrement un lecteur de cartes positionné dans un boîtier de faibles dimensions. Une tête de lecture magnétique est configurée pour être couplée à un dispositif mobile et le lecteur de cartes dispose d'une fente pour balayer une bande magnétique d'une carte. La tête de lecture lit les données sur la bande magnétique et produit un signal représentatif des données stockées sur la bande magnétique. Une prise de sortie, ici de type jack, est adaptée pour être insérée dans un port du dispositif mobile et délivrer un signal de sortie au dispositif mobile en question. Alternativement, des solutions de connexion par l'intermédiaire d'un port USB (pour « Universal Serial Bus » en anglais) sont proposées en lieu et place de l'utilisation du port jack.

D'autres solutions existent, notamment pour permettre l'utilisation d'une carte à puce à la place (ou en complément) d'une carte à bande magnétique.

Par ailleurs, certaines solutions ne nécessitent pas de connexion physique entre le terminal de communication et le lecteur de cartes : une connexion sans fil (par exemple de type Bluetooth) est envisageable. L'inconvénient est que le lecteur de cartes doit être muni de ses propres moyens d'alimentation.

Ces solutions permettent ainsi au commerçant de recevoir un paiement par l'intermédiaire de son terminal mobile (par exemple un smartphone).

Cette solution présente cependant un problème lié à l'absence de, ou à la faible, sécurisation des données de paiement saisies sur le terminal même du commerçant.

En effet, avec certains types de cartes bancaires à bande magnétique, il est nécessaire d'effectuer une signature manuscrite pour valider le paiement. Dans ce cas, l'utilisateur utilise un stylet et/ou un doigt pour signer sur l'écran du terminal de communication du commerçant. Avec d'autres types de cartes bancaires à bande magnétique, de même qu'avec des cartes à puce, il est nécessaire de saisir un code d'identification personnel, ou code PIN (pour « Personal Identification Number » en anglais), pour valider la transaction. Pour saisir ce code PIN, l'utilisateur utilise un clavier virtuel affiché sur l'écran du terminal de communication pour entrer son code PIN.

Un tel élément d'identification personnel (code PIN ou signature) saisi sur l'écran du terminal est alors transmis au lecteur de cartes qui gère la fin de la transaction de manière sécurisée.

Cependant, quand bien même un tel lecteur de cartes possède tous les attributs permettant la gestion sécurisée de la transaction en question (par exemple en intégrant les fonctionnalités requises au sein d'un élément de sécurisation (ou « secure element » en anglais) au sens de la norme PCI PTS (pour « Payment Card Industry PIN Transaction Security » en anglais)), le terminal mobile du commerçant n'intègre a priori pas systématiquement de tels éléments.

De la sorte, la transmission de l'élément d'identification personnel saisi sur l'écran du terminal au lecteur de cartes devient potentiellement un maillon faible de la chaine de traitement sécurisée de la transaction, un tiers pouvant intercepter l'élément d'identification personnel en question.

Il existe ainsi un besoin d'une solution de sécurisation de la transmission de données, par exemple l'élément d'identification personnel, saisies sur un terminal (notamment un terminal mobile) au lecteur de cartes finalisant la transaction afin de garantir l'intégrité de la transaction de paiement en question. Les documents EP2874421, US2013/119130 et US2013/328801 sont considérés comme état de l'art,

### 3 RESUME

L'invention est définie dans les revendications.

Selon l'invention, il est ainsi proposé procédé de réception sécurisée, dans un lecteur de cartes, d'au moins une donnée entrée sur un terminal connecté au lecteur de cartes. Un tel procédé comprend les étapes suivantes, mises en œuvre par le lecteur de cartes :
- obtention d'une clé de chiffrement du lecteur de cartes, dite clé lecteur ;
- encryptage de la clé lecteur, à l'aide d'une clé de chiffrement authentique, dite clé authentique, partagée entre le lecteur de cartes et un serveur d'authentification, délivrant une clé lecteur encryptée ;
- envoi, au serveur d'authentification, de la clé lecteur encryptée pour transmission de la clé lecteur du serveur d'authentification vers le terminal ;
- réception d'une clé encryptée envoyée par le serveur d'authentification, dite clé terminal encryptée, la clé terminal encryptée résultant d'un encryptage d'une clé de chiffrement obtenue par le serveur d'authentification, dite clé terminal, à l'aide de la clé authentique ; et
- réception d'au moins une donnée encryptée envoyée par le terminal, résultant d'un encryptage à l'aide au moins de la clé lecteur et de la clé terminal de l'au moins une donnée.

Ainsi, l'invention propose une solution nouvelle et inventive pour permettre la réception sécurisée, par le lecteur de cartes, de données (par exemple un élément d'identification personnel du type code PIN, signature, etc.) entrées sur le terminal auquel est connecté le lecteur de cartes (par exemple via une saisie sur un écran tactile du terminal) afin que le lecteur de cartes en question puisse finaliser la transaction de paiement.

Pour ce faire, la technique revendiquée propose de se baser sur une clé de chiffrement authentique, partagée entre le lecteur de cartes et un serveur d'authentification du lecteur de cartes en question, afin de permettre au lecteur de cartes et au terminal d'échanger de manière sécurisée des clés de chiffrement (c'est-à-dire les clés lecteur et terminal) leur permettant de sécuriser leurs échanges subséquents.

Par exemple, le partage de la clé authentique est effectué en usine, lors d'une étape d'enregistrement du lecteur de cartes nouvellement fabriqué sur le serveur d'authentification. De la sorte, il est assuré que la clé authentique ne peut être interceptée par un tiers.

Dans un mode de réalisation, la clé lecteur et la clé terminal sont des clés publiques pour la mise en œuvre d'un protocole de chiffrement asymétrique entre le lecteur de cartes et le terminal, l'au moins une donnée encryptée résultant d'un encryptage mettant en œuvre le protocole de chiffrement asymétrique.

Ainsi, les données échangées entre le terminal et le lecteur de cartes sont encryptées selon une technique robuste et efficace basée sur la génération d'une paire de clés, publique et privée, de part et d'autre du lien de transmission à sécuriser, les clés publiques étant échangées entre les deux entités en question.

Par ailleurs, la méthode revendiquée permet de garantir, via l'usage de la clé authentique, qu'aucun tiers ne peut intercepter l'une des clés publiques en question et lui substituer une clé publique frauduleuse (une telle clé publique frauduleuse utilisée par le lecteur de cartes et/ou le terminal permettant au tiers (connaissant la clé privée associée) de décrypter les messages cryptés à l'aide de la clé publique frauduleuse en question).

Dans un mode de réalisation, le procédé comprend en outre une étape d'obtention d'au moins une clé symétrique secrète partagée entre le lecteur de cartes et le terminal par mise en œuvre d'un algorithme du type Diffie-Hellman, au moins un échange de données entre le lecteur de cartes et le terminal pour la mise en œuvre de l'algorithme utilisant le protocole de chiffrement asymétrique. L'au moins une donnée encryptée résulte d'un encryptage additionnel à l'aide de la clé symétrique secrète.

Ainsi, la sécurisation de l'échange de données entre le lecteur de cartes et le terminal est renforcée.

Dans un mode de réalisation, l'au moins une donnée est une donnée d'identification personnelle saisie sur un écran tactile du terminal.

Ainsi, le lecteur de cartes reçoit la donnée d'identification personnelle (par exemple le code PIN ou la signature) saisie sur l'écran du terminal afin de pouvoir finaliser la transaction de paiement de manière sécurisée.

Dans un autre mode de réalisation de l'invention, il est proposé un procédé de sécurisation d'une réception, dans un lecteur de cartes, d'au moins une donnée entrée sur un terminal connecté au lecteur de cartes. Un tel procédé de sécurisation comprend les étapes suivantes, mises en œuvre par un serveur d'authentification du lecteur de cartes :
- une obtention d'une clé de chiffrement du terminal, dite clé terminal ;
- un encryptage de la clé terminal à l'aide d'une clé de chiffrement authentique, dite clé authentique, partagée entre le lecteur de cartes et le serveur d'authentification, délivrant une clé terminal encryptée ;
- un envoi, au lecteur de cartes, de la clé terminal encryptée ;
- une réception d'une clé lecteur encryptée, envoyée par le lecteur de cartes,
   la clé lecteur encryptée résultant d'un encryptage d'une clé de chiffrement du lecteur de cartes, dite clé lecteur, à l'aide de la clé authentique ; et
- une transmission, au terminal, de la clé lecteur.

Ainsi, l'invention concerne également un procédé de sécurisation de la réception, par le lecteur de cartes, de données (par exemple un élément d'identification personnel du type code PIN, signature, etc.) entrées sur le terminal auquel est connecté le lecteur de cartes (par exemple via une saisie sur un écran tactile du terminal) afin de pouvoir finaliser la transaction de paiement.

Pour ce faire, la méthode revendiquée propose qu'un serveur d'authentification du lecteur de cartes assure l'échange de clés de chiffrement (c'est-à-dire les clés lecteur et terminal) entre le lecteur de cartes et l'application de manière sécurisée en se basant sur une clé authentique partagée entre le lecteur de cartes et le serveur en question. Comme discuté ci-dessus, le partage de la clé authentique en question est effectué par exemple en usine, lors d'une étape d'enregistrement sur le serveur d'authentification du lecteur de. De la sorte, il est assuré que la clé authentique ne peut être interceptée par un tiers, garantissant par là-même l'échange sécurisé des clés de chiffrement utilisées par le lecteur de cartes et le terminal pour leurs échanges.

Dans un mode de réalisation, l'obtention comprend une réception de la clé terminal envoyée par le terminal.

Ainsi, le terminal peut générer une clé de chiffrement à chaque nouvelle session de communication avec le lecteur de cartes.

Dans d'autres modes de réalisation, une telle clé terminal peut être prédéfinie et préalablement stockée dans le serveur d'authentification via une étape de référencement du terminal auprès du serveur. Dans ce cas, la clé est obtenue par le serveur via une identification du terminal et la lecture en mémoire de la clé terminal correspondante.

Dans un mode de réalisation, au moins la transmission de la clé lecteur et/ou la réception de la clé terminal met en œuvre un protocole TLS (pour « Transport Layer Security » en anglais).

Ainsi, l'échange d'informations entre le terminal et le serveur d'authentification est également sécurisé quand bien même le terminal ne partage pas la clé authentique avec le serveur d'authentification.

Dans un mode de réalisation des procédés de réception sécurisée et de sécurisation d'une réception, la clé authentique est une clé authentique de base. L'étape d'encryptage de la clé lecteur, respectivement de la clé terminal, comprend :
- une mise à jour d'un numéro de série de clé délivrant un numéro de série de clé mis-à-jour ; et
- une génération d'une clé authentique mise-à-jour sur la base de la clé authentique de base et du numéro de série de clé mis-à-jour, la clé lecteur encryptée, respectivement la clé terminal encryptée, étant générée à l'aide de la clé authentique mise-à-jour.

L'étape d'envoi de la clé lecteur encryptée au serveur d'authentification, respectivement de la clé terminal encryptée au lecteur de cartes, comprend un envoi du numéro de série de clé mis-à-jour.

Ainsi, la clé authentique est mise à jour avant chaque encryptage de la clé lecteur par le lecteur de carte, ou de la clé terminal par le serveur d'authentification (par exemple à chaque début de session d'une communication entre le lecteur de cartes et le terminal en pratique). Le numéro de série de clé mis-à-jour est alors transmis avec la clé encryptée (clé lecteur ou clé application encryptée) afin de permettre au dispositif recevant la clé encryptée de mettre à jour la clé authentique de manière adéquate pour vérifier la validité de la clé encryptée en question.

Dans un mode de réalisation des procédés de réception sécurisée et de sécurisation d'une réception, l'étape d'encryptage de la clé lecteur, respectivement de la clé terminal, comprend une génération, à l'aide de la clé authentique ou de la clé authentique mise-à-jour, d'un code d'authentification de message de la clé lecteur, respectivement de la clé terminal. L'étape d'envoi de la clé lecteur encryptée au serveur d'authentification, respectivement de la clé terminal encryptée au lecteur de cartes, comprend un envoi du code d'authentification de message.

Ainsi, la clé lecteur ou terminal encryptée est générée selon une technique éprouvée et efficace.

Dans un mode de réalisation des procédés de réception sécurisée et de sécurisation d'une réception, l'étape d'envoi de la clé lecteur encryptée au serveur d'authentification, respectivement de la clé terminal encryptée au lecteur de cartes, comprend un envoi de la clé lecteur, respectivement de la clé terminal. L'étape de réception de la clé terminal encryptée par le lecteur de cartes, respectivement de la clé lecteur encryptée par le serveur d'authentification, comprend :
- une génération d'une clé authentique mise-à-jour candidate sur la base de la clé authentique de base et du numéro de série de clé mis-à-jour envoyé par le serveur d'authentification, respectivement le lecteur de cartes ;
- une génération, à l'aide de la clé authentique mise-à-jour candidate, d'un code d'authentification de message candidat de la clé terminal envoyée par le serveur d'authentification, respectivement de la clé lecteur envoyée par le lecteur ; et
- une comparaison du code d'authentification de message candidat et du code d'authentification de message envoyé par le serveur d'authentification, respectivement par le lecteur de cartes ;
la clé terminal envoyée par le serveur d'authentification, respectivement de la clé lecteur envoyée par le lecteur, étant acceptée par le lecteur de cartes, respectivement par le serveur d'authentification, lorsque la comparaison indique que le code d'authentification de message candidat est identique au code d'authentification de message envoyé par le serveur d'authentification, respectivement le lecteur de cartes.

Ainsi, la comparaison entre le code d'authentification de message candidat, généré à l'aide de la clé authentique de base (partagée entre le lecteur de cartes et le serveur d'authentification), et le code d'authentification de message reçu, permet de valider que la clé lecteur reçue, respectivement la clé terminal reçue, n'est pas une clé substituée par un tiers, mais bien la clé que le lecteur de carte, respectivement le serveur d'authentification, a envoyé.

Dans un mode de réalisation des procédés de réception sécurisée et de sécurisation d'une réception, l'étape de transmission, au terminal, de la clé lecteur est mise en œuvre lorsque la comparaison indique que le code d'authentification de message candidat est identique au code d'authentification de message envoyé par le lecteur de cartes.

Ainsi, le serveur d'authentification n'envoie la clé lecteur au terminal que lorsque la validité de la clé lecteur en question est avérée.

Dans un mode de réalisation des procédés de réception sécurisée et de sécurisation d'une réception, le terminal est un smartphone.

Dans un mode de réalisation des procédés de réception sécurisée et de sécurisation d'une réception, le lecteur de cartes respecte une norme PCI PTS de traitement de données de transaction de paiement.

L'invention concerne également un programme d'ordinateur comprenant des instructions de code de programme pour la mise en œuvre d'un procédé de réception sécurisée ou d'un procédé de sécurisation d'une réception (selon l'un quelconque de ses différents modes de réalisation), lorsqu'il est exécuté sur un ordinateur.

Dans un autre mode de réalisation de l'invention, il est proposé un dispositif de réception sécurisée, dans un lecteur de cartes, d'au moins une donnée entrée sur un terminal connecté au lecteur de cartes. Un tel dispositif comprend une machine de calcul reprogrammable ou une machine de calcul dédiée configurée pour :
- obtenir une clé de chiffrement du lecteur de cartes, dite clé lecteur ;
- encrypter la clé lecteur, à l'aide d'une clé de chiffrement authentique, dite clé authentique, partagée entre le lecteur de cartes et un serveur d'authentification, délivrant une clé lecteur encryptée ;
- envoyer, au serveur d'authentification, de la clé lecteur encryptée pour transmission de la clé lecteur du serveur d'authentification vers le terminal ;
- recevoir une clé encryptée envoyée par le serveur d'authentification, dite clé terminal encryptée, la clé terminal encryptée résultant d'un encryptage d'une clé de chiffrement obtenue par le serveur d'authentification, dite clé terminal, à l'aide de la clé authentique ; et
- recevoir au moins une donnée encryptée envoyée par le terminal, résultant d'un encryptage à l'aide au moins de la clé lecteur et de la clé terminal de l'au moins une donnée.

Un tel dispositif de réception sécurisée est notamment apte à mettre en œuvre le procédé de réception sécurisée selon l'invention (selon l'un quelconque des différents modes de réalisation précités).

Ainsi, les caractéristiques et avantages de ce dispositif sont les mêmes que ceux du procédé de réception sécurisée décrit précédemment. Par conséquent, ils ne sont pas détaillés plus amplement.

Dans un autre mode de réalisation de l'invention, il est proposé un dispositif de sécurisation d'une réception, dans un lecteur de cartes, d'au moins une donnée entrée sur un terminal connecté au lecteur de cartes. Un tel dispositif comprend une machine de calcul reprogrammable ou une machine de calcul dédiée configurée pour :
- obtenir une clé de chiffrement du terminal, dite clé terminal ;
- encrypter la clé terminal à l'aide d'une clé de chiffrement authentique, dite clé authentique, partagée entre le lecteur de cartes et le serveur d'authentification, délivrant une clé terminal encryptée ;
- envoyer, au lecteur de cartes, la clé terminal encryptée ;
- recevoir une clé lecteur encryptée, envoyée par le lecteur de cartes, la clé lecteur encryptée résultant d'un encryptage d'une clé de chiffrement du lecteur de cartes, dite clé lecteur, à l'aide de la clé authentique ; et
- transmettre, au terminal, la clé lecteur.

Un tel dispositif de sécurisation d'une réception est notamment apte à mettre en œuvre le procédé de sécurisation d'une réception selon l'invention (selon l'un quelconque des différents modes de réalisation précités).

Ainsi, les caractéristiques et avantages de ce dispositif sont les mêmes que ceux du procédé de sécurisation d'une réception décrit précédemment. Par conséquent, ils ne sont pas détaillés plus amplement.

### 4 LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 illustre un lecteur de cartes connecté à un terminal en communication avec un serveur d'authentification du lecteur de cartes selon un mode de réalisation de l'invention ;
- la figure 2 illustre des étapes d'un procédé de réception sécurisée, par le lecteur de cartes de la figure 1, d'au moins une donnée entrée sur le terminal auquel est connecté le lecteur de cartes en question selon un mode de réalisation de l'invention ;
- la figure 3 illustre des étapes d'un procédé de sécurisation de la réception, par le lecteur de cartes de la figure 1, d'au moins une donnée entrée sur le terminal auquel est connecté le lecteur de cartes en question selon un mode de réalisation de l'invention ;
- la figure 4 présente un exemple simplifié de structure d'un dispositif destiné à mettre en œuvre le procédé de réception sécurisée de données de la figure 2 ; et
- la figure 5 présente un exemple simplifié de structure d'un dispositif destiné à mettre en œuvre le procédé de sécurisation de la réception de données de la figure 3.

### 5 DESCRIPTION DETAILLEE DE L'INVENTION

Sur toutes les figures du présent document, les éléments et étapes identiques sont désignés par une même référence.

Le principe général de la technique décrite repose sur l'utilisation d'une clé de chiffrement authentique partagée entre un lecteur de cartes et un serveur d'authentification du lecteur en question, afin de permettre l'échange de manière sécurisé, via le serveur d'authentification en question, de clés de chiffrement spécifiques entre ce lecteur de cartes et un terminal mobile auquel est connecté le lecteur de cartes.

Par exemple, ce partage de la clé authentique est effectué en usine, pendant la fabrication du lecteur de cartes, lors d'une étape d'enregistrement du lecteur de cartes en question sur le serveur d'authentification. De la sorte, il est assuré que la clé authentique ne peut être interceptée par un tiers, garantissant par là même l'échange sécurisé des clés de cryptage utilisées par le lecteur de cartes et le terminal pour leurs échanges de données subséquents.

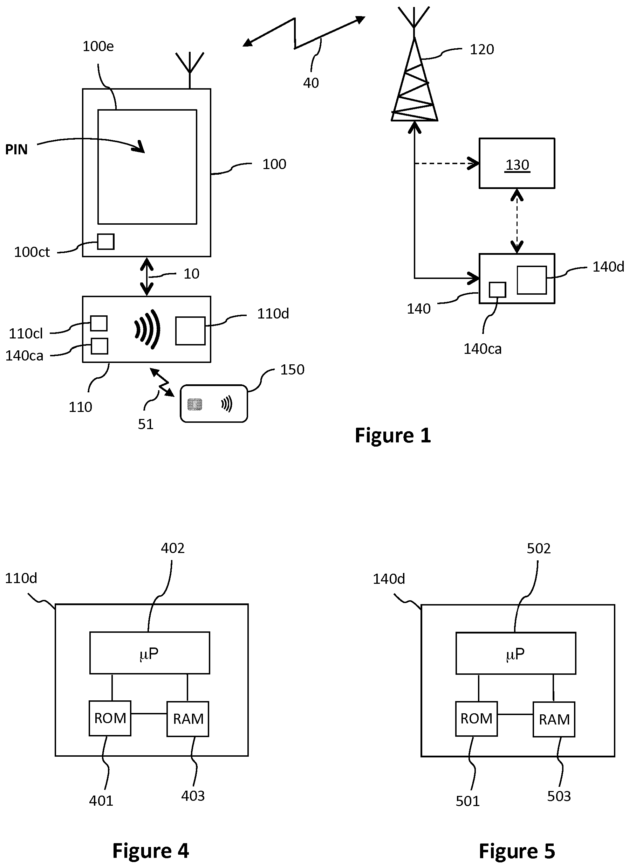

On décrit maintenant, en relation avec la **figure 1****,** un lecteur de cartes 110 connecté à un terminal 100 en communication avec un serveur d'authentification 140 du lecteur de cartes 110 selon un mode de réalisation de l'invention.

Plus particulièrement, le lecteur de cartes 110 est un lecteur de cartes à puce sécurisé apte à finaliser une transaction bancaire auprès d'un serveur (non représenté) d'une banque concernée par la transaction en question. Dans ce sens, le lecteur de cartes 110 intègre toutes les fonctionnalités de sécurité correspondantes telles que requises par l'industrie du paiement par cartes, notamment l'intégration des fonctionnalités de sécurité en question au sein d'un élément de sécurisation tel que requis par les normes PCI PTS.

Cependant, contrairement aux lecteurs connus, le lecteur de cartes 110 n'intègre pas de moyens permettant de saisir de données d'identification personnelle, ici le code PIN associé à la carte à puce lue 150. A contrario, le terminal 100, par exemple un smartphone, auquel est connecté (10) le lecteur de cartes 110 (par exemple via un lien physique du type USB ou jack, ou un lien radio du type Bluetooth) intègre un écran tactile 100e sur lequel le code PIN est saisi. Plus particulièrement, une application de saisie est mise en œuvre sur le terminal 100 afin de gérer la saisie sécurisée du code PIN sur l'écran tactile 100e.

De la sorte, pour payer à l'aide de sa carte bancaire 150, un utilisateur présente (51) cette dernière au lecteur de cartes 110, mais saisit son code PIN sur l'écran tactile 100e. Le code PIN est alors transmis (10) au lecteur de cartes 110, sous une forme cryptée comme détaillé par la suite, afin que ce dernier finalise la transaction de paiement.

Dans des variantes, la carte bancaire est une carte à bande magnétique et la donnée d'identification personnelle peut notamment être soit une signature de l'utilisateur, soit un code PIN saisi sur l'écran tactile 100e.

Dans d'autres variantes, le lecteur de cartes peut intégrer un clavier de saisie de caractères, le code PIN restant saisi sur l'écran tactile 100e du terminal 100 afin de finaliser la transaction bancaire.

Dans d'autres modes de réalisation non représentés, le code PIN (ou plus généralement une donnée d'identification) est saisi non pas sur l'écran tactile 100e, mais sur un clavier physique du terminal 100 ou par tout autre moyen adéquat.

Quel que soit le mode de réalisation ou la variante considéré, se pose le problème de la transmission sécurisée de la donnée d'identification personnelle saisie sur le terminal 100 au lecteur de cartes 110 afin que ce dernier finalise la transaction de paiement.

Afin de sécuriser cette transmission, un protocole de cryptage basé sur l'usage au moins d'une clé de chiffrement utilisée par le terminal 100, dite clé terminal 100ct, et une clé utilisée par le lecteur de cartes 110, dite clé lecteur 110cl, est utilisé par ces deux entités pour crypter les données qu'elles s'échangent.

Cependant, le lecteur de cartes 110 n'a pas la connaissance *a priori* du terminal 100 auquel il va être connecté, et réciproquement. De la sorte, se pose le problème de l'échange sécurisé des deux clés de chiffrement 110cl, 100ct au moment de l'appairage du lecteur de cartes 110 et du terminal 100 de sorte qu'un tiers ne puisse les intercepter et/ou substituer une clé frauduleuse à l'une d'elles ou aux deux (par exemple par une attaque dite de l'homme du milieu).

Pour sécuriser cet échange des deux clés de chiffrement 110cl, 100ct, la technique de l'invention propose que le lecteur de cartes 110 envoie la clé lecteur 110cl au terminal 100 (par exemple à l'application de saisie qui gère la saisie sécurisée du code PIN sur l'écran tactile 100e) via un serveur d'authentification 140 du lecteur de cartes 110. Réciproquement, le terminal 100 envoie la clé terminal 100ct au lecteur de cartes 110 via le serveur d'authentification 140 en question.

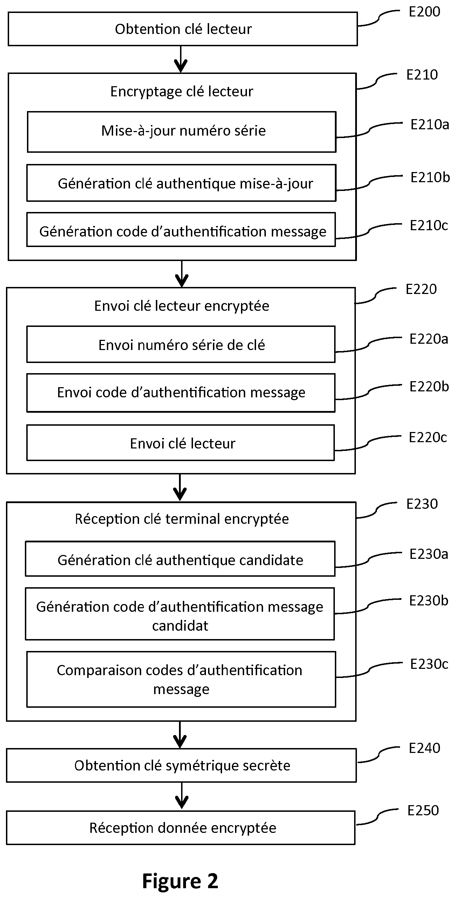

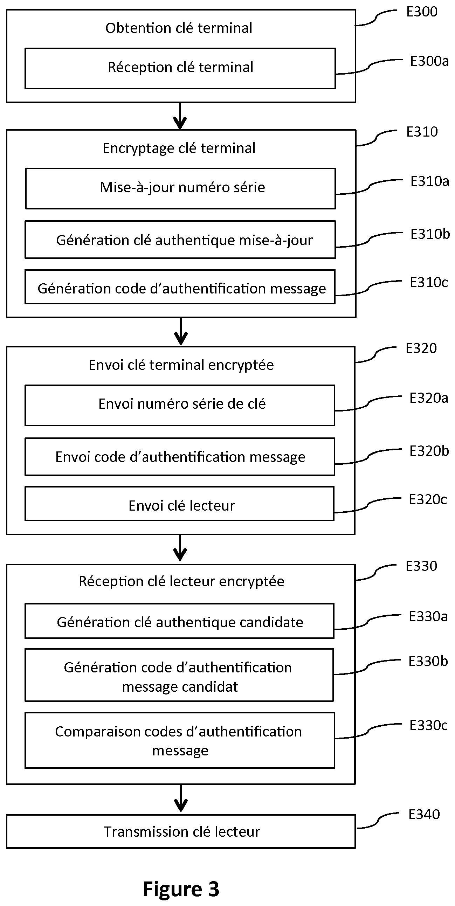

En effet, comme décrit ci-dessous en relation avec les figures 2 et 3, le serveur d'authentification 140 et le lecteur de cartes 110 partagent une clé de chiffrement authentique, dite clé authentique 140ca, permettant de sécuriser les échanges entre ces deux entités. Par exemple, le partage de la clé authentique 140ca est effectué en usine, lors d'une étape d'enregistrement sur le serveur d'authentification 140 du lecteur de cartes 110 nouvellement fabriqué. De la sorte, il est assuré que la clé authentique 140ca ne peut être interceptée par un tiers, garantissant par là-même l'échange ultérieur de manière sécurisée, via le serveur d'authentification 140, des clés de chiffrement 110cl, 100ct utilisées par le lecteur de cartes 110 et le terminal 100 pour leurs échanges.

Par ailleurs, les échanges (40) entre le serveur d'authentification 140 et le terminal 100, bien que non cryptés à l'aide de la clé authentique 140ca (clé qui est non connue *a priori* du terminal 100), se font via une connexion internet sécurisée, par exemple à l'aide d'un protocole TLS (pour « Transport Layer Security » en anglais)..

De la sorte, l'échange des clés lecteur 110cl et terminal 100ct se fait de manière sécurisée de bout en bout.

Indépendamment de la forme logique (en termes de cryptage, protocole, etc. tels que décrits ci-dessus) que prennent les échanges entre le lecteur de cartes 110, le terminal 100 et le serveur d'authentification 140, les données échangées empruntent le lien physique existant entre le terminal 100 et le serveur d'authentification 140.

Plus particulièrement, le terminal 100 est un terminal mobile communiquant selon un standard de radiocommunication cellulaire (par exemple 2G, 3G, 4G, etc.) avec une station de base 120 du réseau cellulaire correspondant. Les données échangées entre le serveur d'authentification 140 et le terminal 100 (soit à destination du terminal 100 lui-même, soit à destination du lecteur de cartes 110, et sur la base du cryptage ou du protocole de sécurité correspondant à la destination en question comme décrit ci-dessus) empruntent alors le canal radio entre ces deux entités.

Dans une variante, les données échangées entre le serveur d'authentification 140 et le terminal 100 transitent (flèches en pointillés) par un serveur de gestion 130 de l'application de saisie de saisie qui gère la saisie sécurisée du code PIN sur l'écran tactile 100e.

On décrit maintenant, en relation avec les **figures 2** **et** **3****,** les étapes d'un procédé de réception sécurisée (figure 2), ainsi que d'un procédé de sécurisation de la réception (figure 3), par le lecteur de cartes 110, d'au moins une donnée entrée sur le terminal 100 selon un mode de réalisation de l'invention.

Lors d'une étape E200 (figure 2) mise en œuvre par le lecteur de cartes 110, la clé lecteur 110cl est obtenue par le lecteur de cartes 110.

Plus particulièrement, la clé lecteur 110cl est une clé publique associée à une clé lecteur privée afin de mettre en place un protocole de chiffrement asymétrique pour l'échange de données entre le lecteur de cartes 110 et le terminal 100.

Dans une variante, la paire constituée par la clé lecteur 110cl et la clé lecteur privée associée est générée à chaque nouvelle session initiant une communication avec le terminal 100.

Dans une autre variante, la paire constituée par la clé lecteur 110cl et la clé lecteur privée associée est prédéfinie et est stockée dans une mémoire sécurisée du lecteur de cartes 110. De la sorte, la clé lecteur 110cl est obtenue par lecture de la mémoire sécurisée en question dans cette variante.

Lors d'une étape E210 (figure 2) mise en œuvre par le lecteur de cartes 110, la clé lecteur 110cl obtenue lors de l'étape E200 est encryptée par le lecteur de cartes 110 à l'aide de la clé authentique 140ca partagée avec le serveur authentique 140. Une clé lecteur encryptée est ainsi délivrée.

Pour ce faire, lors d'une sous-étape E210a, un numéro de série de clé est mis-à-jour au début de la nouvelle session initiant une communication avec le terminal 100.

Lors d'une sous-étape E210b, une clé authentique mise-à-jour, ou clé de session, est générée sur la base de la clé authentique 140ca (qui est alors considérée comme une clé authentique de base) et du numéro de série de clé mis-à-jour délivré lors de la sous-étape E210a. Une telle génération de la clé authentique mise-à-jour se fait par exemple selon la méthode définie dans la norme ANSI X9.24-1.

Lors d'une sous-étape E210c, la clé lecteur encryptée est généré sous la forme d'un code d'authentification de message de la clé lecteur 110cl à l'aide de la clé authentique mise à jour. Une telle génération du code d'authentification de message se fait par exemple selon la méthode définie dans la norme ISO 9797-1.

Lors d'une étape d'envoi E220 (figure 2), la clé lecteur encryptée délivrée lors de l'étape E210 est envoyée au serveur d'authentification 140 pour transmission subséquente de la clé lecteur 110cl depuis le serveur d'authentification 140 vers le terminal 100.

Plus particulièrement, lors d'une sous-étape E220a, le numéro de série de clé mis-à-jour délivré lors de la sous-étape E210a est envoyé au serveur d'authentification 140.

De même, lors d'une sous-étape E220b, le code d'authentification de message de la clé lecteur 110cl est également envoyé au serveur d'authentification 140.

Enfin, lors d'une sous-étape E220c, la clé lecteur 110cl est également envoyée au serveur d'authentification 140.

Dans certains modes de réalisation (non illustrés), les trois sous-étapes d'envoi E220a, E220b, E220c précitées sont réalisées en seulement une ou deux étapes d'envoi des informations correspondantes qui sont alors combinées pour envoi simultané.

Sur la base de ces trois informations, le serveur d'authentification 140 est alors apte à vérifier que la clé lecteur 110cl reçu du lecteur de cartes 110 est bien la clé publique du lecteur de cartes 110, et non une clé substituée par un tiers.

Pour ce faire, lors d'une étape de réception E330 (figure 3) mise en œuvre par le serveur d'authentification 140, le serveur d'authentification 140 reçoit la clé lecteur encryptée.

Plus particulièrement, l'étape de réception E330 comprend les sous-étapes suivantes afin de contrôler que la clé lecteur 110cl n'est pas une clé substituée :
- lors d'une sous-étape E330a, une clé authentique mise-à-jour candidate est générée sur la base de la clé authentique 140ca (qui est alors considérée comme une clé authentique de base) et du numéro de série de clé mis-à-jour reçu du lecteur de cartes 110. Une telle génération se fait sur la base des mêmes opérations que celles décrites ci-dessus en relation avec la sous-étape E210b de génération, par le lecteur de cartes 110, de la clé authentique mise-à-jour, ou clé de session, utilisée pour le cryptage de la clé lecteur 110cl ;
- lors d'une sous-étape E330b, un code d'authentification de message candidat de la clé lecteur 110cl est généré à l'aide de la clé authentique mise-à-jour candidate ; et
- lors d'une sous-étape E330c, une comparaison est effectuée entre le code d'authentification de message candidat et le code d'authentification de message.

Plus particulièrement, la clé lecteur 110cl est acceptée par le serveur d'authentification 140 lorsque les deux codes d'authentification de message en question sont identiques. En effet, dans ce cas il est assuré que la clé reçue par le serveur d'authentification 140 lors de l'étape de réception E330 est bien la clé lecteur 110cl et donc que cette dernière n'a pas été substituée par un tiers durant la transmission entre le lecteur de cartes 110 et le serveur d'authentification 140.

Lors d'une étape E340 (figure 3) mise en œuvre par le serveur d'authentification 140, le serveur d'authentification 140 transmet la clé lecteur 110cl reçue lors de l'étape E330 au terminal 100.

Plus particulièrement, l'étape E340 est mise en œuvre lorsque la sous-étape E330c de comparaison entre le code d'authentification de message candidat et le code d'authentification de message indique que les deux codes d'authentification de message en question sont identiques.

Par ailleurs, comme discuté ci-dessus en relation avec la figure 1, l'envoi de la clé lecteur 110cl par le serveur d'authentification 140 au terminal 100 se fait via une connexion sécurisée à l'aide d'un protocole TLS. De la sorte, quand bien même l'échange de données entre le serveur d'authentification 140 et le terminal 100 n'est pas crypté à l'aide de la clé authentique 140ca (clé qui est non connue *a priori* du terminal 100), la sécurité des données transmises reste garantie.

Symétriquement aux étapes E200, E210 et E230 mises en œuvre par le lecteur de cartes 110 et décrites ci-dessus, le serveur d'authentification 140 met de son côté en œuvre les étapes E300, E310 et E330 (figure 3) pour respectivement obtenir la clé terminal 100ct, encrypter ladite clé, et envoyer au lecteur de cartes 110 la clé terminal encryptée ainsi obtenue.

Plus particulièrement, lors de l'étape E300 (figure 3) le serveur d'authentification 140 obtient la clé terminal 100ct.

Pour ce faire, lors d'une sous-étape E300a, le serveur d'authentification 140 reçoit la clé terminal 100ct envoyée par le terminal 100 via la connexion sécurisée par le protocole TLS comme décrit ci-dessus.

Plus particulièrement, la clé terminal 100ct est une clé publique associée à une clé terminal privée afin de mettre en place un protocole de chiffrement asymétrique pour l'échange de données entre le lecteur de cartes 110 et le terminal 100.

Dans une variante, la paire constituée par la clé terminal 100ct et la clé terminal privée associée est générée à chaque nouvelle session initiant une communication avec le terminal 100.

Dans d'autres modes de réalisation (non illustrés), la clé terminal 100ct est prédéfinie et préalablement stockée dans le serveur d'authentification 140 via une étape de référencement du terminal 100 auprès du serveur d'authentification 140. Dans ce cas, la clé terminal 100ct est obtenue par le serveur d'authentification 140 via une identification du terminal 100 et la lecture en mémoire de la clé terminal 100ct correspondante.

De même, lors d'une étape E310 (figure 3), le serveur d'authentification 140 encrypte la clé terminal 100ct obtenue lors de l'étape E300 à l'aide de la clé authentique 140ca partagée avec le lecteur de cartes 110. Une clé terminal encryptée est ainsi délivrée.

Le serveur d'authentification 140 exécute alors les mêmes opérations que celles exécutées par le lecteur de cartes 110 lors des sous-étapes E210a, E210b et E210c décrites ci-dessus.

Plus particulièrement, lors d'une sous-étape E310a, un numéro de série de clé est mis-à-jour au début de la nouvelle session initiant une communication avec le lecteur de cartes 110.

Lors d'une sous-étape E310b, une clé authentique mise-à-jour, ou clé de session, est générée sur la base de la clé authentique 140ca (qui est alors considérée comme une clé authentique de base) et du numéro de série de clé mis-à-jour délivré lors de la sous-étape E310a.

Lors d'une sous-étape E310c, la clé terminal encryptée est générée sous la forme d'un code d'authentification de message de la clé terminal 100ct à l'aide de la clé authentique mise-à-jour.

Enfin, lors d'une étape d'envoi E320 (figure 3), la clé terminal encryptée délivrée lors de l'étape E310 est envoyée au lecteur de cartes 110.

Le serveur d'authentification 140 exécute alors les mêmes opérations que celles exécutées par le lecteur de cartes 110 lors des sous-étapes E220a, E220b et E220c décrites ci-dessus.

Plus particulièrement, lors d'une sous-étape E320a, le numéro de série de clé mis-à-jour délivré lors de la sous-étape E310a est envoyé au lecteur de cartes 110.

De même, lors d'une sous-étape E320b, le code d'authentification de message de la clé terminal 100ct est également envoyé au lecteur de cartes 110.

Enfin, lors d'une sous-étape E320c, la clé terminal 110ct est également envoyée au lecteur de cartes 110.

Dans certains modes de réalisation (non illustrés), les trois sous-étapes d'envoi E320a, E320b, E320c précitées sont réalisées en seulement une ou deux étapes d'envoi des informations correspondantes qui sont alors combinées pour envoi simultané.

Suite à l'étape d'envoi E320 mise en œuvre par le serveur d'authentification 140, le lecteur de cartes 110, est apte à vérifier, sur la base des trois informations reçues, que la clé terminal 100ct reçue du serveur d'authentification 140 est bien la clé publique du terminal 100, et non une clé substituée par un tiers.

Pour ce faire, le lecteur de cartes 110 exécute alors les mêmes opérations que celles exécutées par le serveur d'authentification 140 lors des sous-étapes E330a, E330b et E330c décrites ci-dessus.

Plus particulièrement, lors d'une étape de réception E230 (figure 2), le lecteur de cartes 110 reçoit la clé terminal 100ct sous une forme encryptée, dite clé terminal encryptée, envoyée par le serveur d'authentification 140. Une telle étape de réception E230 comprend les sous-étape suivantes afin de contrôler que la clé terminal 100ct n'est pas une clé substituée :
- lors d'une sous-étape E230a, une clé authentique mise-à-jour candidate est générée sur la base de la clé authentique 140ca (qui est alors considérée comme une clé authentique de base) et du numéro de série de clé mis-à-jour reçu du serveur d'authentification 140 ;
- lors d'une sous-étape E230b, un code d'authentification de message candidat de la clé terminal 100ct est généré à l'aide de la clé authentique mise-à-jour candidate ; et
- lors d'une sous-étape E230c, une comparaison est effectuée entre le code d'authentification de message candidat et le code d'authentification de message.

Plus particulièrement, la clé terminal 100ct est acceptée par le lecteur de cartes lorsque les deux codes d'authentification de message en question sont identiques. En effet, dans ce cas il est assuré que la clé reçue par le lecteur de cartes 110 lors de l'étape de réception E230 est bien la clé terminal 100ct et donc que cette dernière n'a pas été substituée par un tiers.

A l'issue de la mise en œuvre des étapes précitées, le lecteur de cartes 110 a obtenu de manière sécurisée la clé terminal 100ct, et le terminal 100 a obtenu de manière sécurisée la clé lecteur 110cl. De la sorte, l'échange de données sous forme cryptée entre le terminal 100 et le lecteur de cartes 110 peut commencer sur la base du protocole de chiffrement asymétrique basé sur les clés publiques terminal 100ct et lecteur 110cl. Notamment, le lecteur de cartes 110 est apte à recevoir de manière sécurisée le code PIN saisi par l'utilisateur sur l'écran 100e du terminal 100.

Cependant, afin de renforcer encore la sécurisation des échanges de données entre le lecteur de cartes 110 et le terminal 100, le lecteur de cartes 110 met en œuvre une étape additionnelle E240 (figure 2) d'obtention d'une clé symétrique secrète partagée entre le lecteur de cartes 110 et le terminal 100. Une telle obtention est basée sur un algorithme du type Diffie-Hellman (tel que défini par exemple dans la norme ANSI X9.42) impliquant des échanges de données entre le lecteur de cartes 110 et le terminal 100. Les échanges en question utilisent alors le protocole de chiffrement asymétrique basé sur les clés publiques échangées entre le terminal 100 et le lecteur de cartes 110, c'est-à-dire les clés terminal 100ct et lecteur 110cl.

Lors d'une étape E250, le lecteur de cartes 110 reçoit du terminal 100 les données sous forme encryptées, par exemple le code PIN saisi sur l'écran tactile 100e du terminal 100.

De telles données sont encryptées via l'usage du protocole de de chiffrement asymétrique précité considéré seul ou en combinaison avec le chiffrement additionnel basé sur la clé symétrique secrète.

De la sorte, le lecteur de cartes 110 est apte à finaliser la transaction de paiement de manière sécurisée auprès d'un serveur d'une banque concernée par la transaction en question.

La **figure 4** présente un exemple de structure d'un dispositif 110d de réception sécurisée, dans le lecteur de cartes 110, d'au moins une donnée entrée sur le terminal 100. Plus particulièrement, un tel dispositif 110d permet la mise en œuvre du procédé de la figure 2. Le dispositif 110d comprend une mémoire vive 403 (par exemple une mémoire RAM), une unité de traitement 402 équipée par exemple d'un processeur, et pilotée par un programme d'ordinateur stocké dans une mémoire morte 401 (par exemple une mémoire ROM ou un disque dur). A l'initialisation, les instructions de code du programme d'ordinateur sont par exemple chargées dans la mémoire vive 403 avant d'être exécutées par le processeur de l'unité de traitement 402.

Cette figure 4 illustre seulement une manière particulière, parmi plusieurs possibles, de réaliser les moyens compris dans le dispositif 110d, afin qu'il effectue certaines étapes du procédé détaillé ci-dessus, en relation avec la figure 2 (dans l'un quelconque des différents modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel). Dans le cas où les moyens compris dans le dispositif 110d sont réalisés avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Dans le mode de réalisation illustré sur la figure 1, un tel dispositif 110d est inclus dans le lecteur de cartes 110.

Dans certaines variantes, le dispositif 110d est intégré au sein d'un élément de sécurisation tel que requis par les normes PCI PTS.

La **figure 5** présente un exemple de structure d'un dispositif 140d de sécurisation d'une réception, dans le lecteur de cartes 110, d'au moins une donnée entrée sur le terminal 100. Plus particulièrement, un tel dispositif 140d permet la mise en œuvre du procédé de la figure 3. Le dispositif 140d comprend une mémoire vive 503 (par exemple une mémoire RAM), une unité de traitement 502 équipée par exemple d'un processeur, et pilotée par un programme d'ordinateur stocké dans une mémoire morte 501 (par exemple une mémoire ROM ou un disque dur). A l'initialisation, les instructions de code du programme d'ordinateur sont par exemple chargées dans la mémoire vive 503 avant d'être exécutées par le processeur de l'unité de traitement 502.

Cette figure 5 illustre seulement une manière particulière, parmi plusieurs possibles, de réaliser les moyens compris dans le dispositif 140d, afin qu'il effectue certaines étapes du procédé détaillé ci-dessus, en relation avec la figure 3 (dans l'un quelconque des différents modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel). Dans le cas où les moyens compris dans le dispositif 140d sont réalisés avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Dans le mode de réalisation illustré sur la figure 1, un tel dispositif 140d est inclus dans le serveur d'authentification 140.

Dans certaines variantes, le dispositif 140d est intégré au sein d'un élément de sécurisation tel que requis par les normes PCI PTS.

## Revendications

1. Procédé de réception sécurisée, dans un lecteur de cartes (110), d'au moins une donnée entrée sur un terminal (100) connecté audit lecteur de cartes, ladite au moins une donnée entrée étant une donnée d'identification personnelle saisie sur un écran du terminal, comprenant les étapes suivantes, mises en œuvre par ledit lecteur de cartes :
- obtention (E200) d'une clé de chiffrement dudit lecteur de cartes, dite clé lecteur (110cl) ;
- encryptage (E210) de ladite clé lecteur, à l'aide d'une clé de chiffrement authentique, dite clé authentique (140ca), partagée entre ledit lecteur de cartes et un serveur d'authentification (140) du lecteur de cartes, délivrant une clé lecteur encryptée ;
- envoi (E220), audit serveur d'authentification, de ladite clé lecteur encryptée pour transmission de ladite clé lecteur dudit serveur d'authentification vers ledit terminal ;
- réception (E230) d'une clé encryptée envoyée par ledit serveur d'authentification, dite clé terminal encryptée,
ladite clé terminal encryptée résultant d'un encryptage d'une clé de chiffrement obtenue par ledit serveur d'authentification, dite clé terminal (100ct), à l'aide de ladite clé authentique ; et
- réception (E250) d'au moins une donnée encryptée envoyée par ledit terminal, résultant d'un encryptage à l'aide au moins de ladite clé lecteur et de ladite clé terminal de ladite au moins une donnée.

2. Procédé selon la revendication 1, dans lequel ladite clé lecteur et ladite clé terminal sont des clés publiques pour la mise en œuvre d'un protocole de chiffrement asymétrique entre ledit lecteur de cartes et ledit terminal,
ladite au moins une donnée encryptée résultant d'un encryptage mettant en œuvre ledit protocole de chiffrement asymétrique.

3. Procédé selon la revendication 2 comprenant en outre une étape d'obtention (E240) d'au moins une clé symétrique secrète partagée entre ledit lecteur de cartes et ledit terminal par mise en œuvre d'un algorithme du type Diffie-Hellman, au moins un échange de données entre ledit lecteur de cartes et ledit terminal pour la mise en œuvre dudit algorithme utilisant ledit protocole de chiffrement asymétrique,
et dans lequel l'au moins une donnée encryptée résulte d'un encryptage additionnel à l'aide de ladite clé symétrique secrète.

4. Procédé de sécurisation d'une réception, par un lecteur de cartes (110), d'au moins une donnée entrée sur un terminal (100) connecté audit lecteur de cartes, ladite au moins une donnée entrée étant une donnée d'identification personnelle saisie sur un écran du terminal, comprenant les étapes suivantes, mises en œuvre par un serveur d'authentification (140) dudit lecteur de cartes :
- une obtention (E300) d'une clé de chiffrement dudit terminal, dite clé terminal (100ct) ;
- un encryptage (E310) de ladite clé terminal à l'aide d'une clé de chiffrement authentique, dite clé authentique (140ca), partagée entre ledit lecteur de cartes et ledit serveur d'authentification, délivrant une clé terminal encryptée ;
- un envoi (E320), audit lecteur de cartes, de ladite clé terminal encryptée ;
- une réception (E330) d'une clé lecteur encryptée, envoyée par ledit lecteur de cartes, ladite clé lecteur encryptée résultant d'un encryptage d'une clé de chiffrement dudit lecteur de cartes, dite clé lecteur (110cl), à l'aide de ladite clé authentique ; et
- une transmission (E340), audit terminal, de ladite clé lecteur.

5. Procédé selon la revendication 4 dans lequel ladite obtention comprend une réception (E300a) de ladite clé terminal envoyée par ledit terminal.

6. Procédé selon la revendication 4 ou 5 dans lequel au moins ladite transmission de ladite clé lecteur et/ou ladite réception de ladite clé terminal met en œuvre un protocole TLS (pour « Transport Layer Security » en anglais).

7. Procédé selon l'une quelconque des revendications 1 à 6 dans lequel ladite clé authentique est une clé authentique de base,
et dans lequel ladite étape d'encryptage de ladite clé lecteur, respectivement de ladite clé terminal, comprend :
- une mise à jour (E210a, E310a) d'un numéro de série de clé délivrant un numéro de série de clé mis-à-jour ; et
- une génération (E210b, E310b) d'une clé authentique mise-à-jour sur la base de ladite clé authentique de base et dudit numéro de série de clé mis-à-jour,
ladite clé lecteur encryptée, respectivement ladite clé terminal encryptée, étant générée à l'aide de ladite clé authentique mise-à-jour ;
et dans lequel ladite étape d'envoi de ladite clé lecteur encryptée audit serveur d'authentification, respectivement de ladite clé terminal encryptée audit lecteur de cartes, comprend un envoi (E220a, E320a) dudit numéro de série de clé mis-à-jour.

8. Procédé selon l'une quelconque des revendications 1 à 7 dans lequel ladite étape d'encryptage de ladite clé lecteur, respectivement de ladite clé terminal, comprend une génération (E210c, E310c), à l'aide de ladite clé authentique ou de ladite clé authentique mise-à-jour, d'un code d'authentification de message de ladite clé lecteur, respectivement de ladite clé terminal,
et dans lequel ladite étape d'envoi de ladite clé lecteur encryptée audit serveur d'authentification, respectivement de ladite clé terminal encryptée audit lecteur de cartes, comprend un envoi (E220b, E320b) dudit code d'authentification de message.

9. Procédé selon la revendication 8 en ce qu'elle dépend de la revendication 7 dans lequel ladite étape d'envoi de ladite clé lecteur encryptée audit serveur d'authentification, respectivement de ladite clé terminal encryptée audit lecteur de cartes, comprend un envoi (E220c, E320c) de ladite clé lecteur, respectivement de ladite clé terminal,
et dans lequel ladite étape de réception de ladite clé terminal encryptée par ledit serveur d'authentification, respectivement de ladite clé lecteur encryptée par ledit lecteur de cartes, comprend :
- une génération (E230a, E330a) d'une clé authentique mise-à-jour candidate sur la base de ladite clé authentique de base et dudit numéro de série de clé mis-à-jour envoyé par ledit serveur d'authentification, respectivement ledit lecteur de cartes ;
- une génération (E230b, E330b), à l'aide de ladite clé authentique mise-à-jour candidate, d'un code d'authentification de message candidat de ladite clé terminal envoyée par ledit serveur d'authentification, respectivement de ladite clé lecteur envoyée par ledit lecteur ; et
- une comparaison (E230c, E330c) dudit code d'authentification de message candidat et dudit code d'authentification de message envoyé par ledit serveur d'authentification, respectivement par ledit lecteur de cartes ;
ladite clé terminal envoyée par ledit serveur d'authentification, respectivement de ladite clé lecteur envoyée par ledit lecteur, étant acceptée par ledit lecteur de cartes, respectivement par ledit serveur d'authentification, lorsque ladite comparaison indique que ledit code d'authentification de message candidat est identique audit code d'authentification de message envoyé par ledit serveur d'authentification, respectivement ledit lecteur de cartes.

10. Procédé selon la revendication 9 en ce qu'elle dépend de l'une quelconque des revendications 4 à 6 dans lequel ladite étape de transmission, audit terminal, de ladite clé lecteur est mise en œuvre lorsque ladite comparaison indique que ledit code d'authentification de message candidat est identique audit code d'authentification de message envoyé par ledit lecteur de cartes.

11. Produit programme d'ordinateur comprenant des instructions de code de programme pour la mise en œuvre d'un procédé selon l'une quelconque des revendications 1 à 10, lorsque ledit programme est exécuté par un processeur.

12. Dispositif (110d) de réception sécurisée, dans un lecteur de cartes (110), d'au moins une donnée entrée sur un terminal (100) connecté audit lecteur de cartes, ladite au moins une donnée entrée étant une donnée d'identification personnelle saisie sur un écran du terminal, comprenant une machine de calcul reprogrammable (402) ou une machine de calcul dédiée configurée pour :
- obtenir une clé de chiffrement dudit lecteur de cartes, dite clé lecteur (110cl) ;
- encrypter ladite clé lecteur, à l'aide d'une clé de chiffrement authentique, dite clé authentique (140ca), partagée entre ledit lecteur de cartes et un serveur d'authentification (140) du lecteur de carte, délivrant une clé lecteur encryptée ;
- envoyer, audit serveur d'authentification, de ladite clé lecteur encryptée pour transmission de ladite clé lecteur dudit serveur d'authentification vers ledit terminal ;
- recevoir une clé encryptée envoyée par ledit serveur d'authentification, dite clé terminal encryptée,
ladite clé terminal encryptée résultant d'un encryptage d'une clé de chiffrement obtenue par ledit serveur d'authentification, dite clé terminal (100ct), à l'aide de ladite clé authentique ; et
recevoir au moins une donnée encryptée envoyée par ledit terminal, résultant d'un encryptage à l'aide au moins de ladite clé lecteur et de ladite clé terminal de ladite au moins une donnée.

13. Dispositif (140d) de sécurisation d'une réception, par un lecteur de cartes (110), d'au moins une donnée entrée sur un terminal (100) connecté audit lecteur de cartes, ladite au moins une donnée entrée étant une donnée d'identification personnelle saisie sur un écran du terminal, comprenant une machine de calcul reprogrammable (502) ou une machine de calcul dédiée configurée pour :
- obtenir une clé de chiffrement dudit terminal, dite clé terminal (100ct) ;
- encrypter ladite clé terminal à l'aide d'une clé de chiffrement authentique, dite clé authentique (140ca), partagée entre ledit lecteur de cartes et ledit serveur d'authentification du lecteur de cartes, délivrant une clé terminal encryptée ;
- envoyer, audit lecteur de cartes, ladite clé terminal encryptée ;
- recevoir une clé lecteur encryptée, envoyée par ledit lecteur de cartes,
ladite clé lecteur encryptée résultant d'un encryptage d'une clé de chiffrement dudit lecteur de cartes, dite clé lecteur (110cl), à l'aide de ladite clé authentique ; et
- transmettre, audit terminal, ladite clé lecteur.

## Patentansprüche

1. Verfahren zum gesicherten Empfang, in einem Kartenleser (110), von mindestens einem Datum, das an einem mit dem Kartenleser verbundenen Terminal (100) eingegeben wurde, wobei das mindestens eine eingegebene Datum ein persönliches Identifikationsdatum ist, das auf einem Bildschirm des Terminals eingegeben wurde, mit den folgenden Schritten, die von dem Kartenleser durchgeführt werden:
- Erhalten (E200) eines Verschlüsselungsschlüssels des Kartenlesers, des sogenannten Leserschlüssels (110cl) ;
- Verschlüsselung (E210) des Leserschlüssels mithilfe eines authentischen Verschlüsselungsschlüssels, des sogenannten authentischen Schlüssels (140ca), der zwischen dem Kartenleser und einem Authentifizierungsserver (140) des Kartenlesers geteilt wird, wodurch ein verschlüsselter Leserschlüssel geliefert wird;
- Senden (E220) des verschlüsselten Leserschlüssels an den Authentifizierungsserver, um den Leserschlüssel vom Authentifizierungsserver zum Terminal zu übertragen;
- Empfangen (E230) eines verschlüsselten Schlüssels, der von dem Authentifizierungsserver gesendet wurde, des sogenannten verschlüsselten Terminalschlüssels,
wobei der verschlüsselte Terminalschlüssel aus einer Verschlüsselung eines von dem Authentifizierungsserver erhaltenen Verschlüsselungsschlüssels, des sogenannten Terminalschlüssels (100ct), mithilfe des authentischen Schlüssels resultiert; und
- Empfangen (E250) von mindestens einem verschlüsselten Datenelement, das von dem Terminal gesendet wird und das aus einer Verschlüsselung mithilfe mindestens des Leserschlüssels und des Terminalschlüssels des mindestens einen Datenelements resultiert.

2. Verfahren nach Anspruch 1, wobei der Leserschlüssel und der Terminalschlüssel öffentliche Schlüssel für die Implementierung eines asymmetrischen Verschlüsselungsprotokolls zwischen dem Kartenleser und dem Terminal sind,
wobei die mindestens einen verschlüsselten Daten aus einer Verschlüsselung resultieren, die das asymmetrische Verschlüsselungsprotokoll implementiert.

3. Verfahren nach Anspruch 2, das außerdem einen Schritt zur Erlangung (E240) mindestens eines geheimen symmetrischen Schlüssels umfasst, der zwischen dem Kartenleser und dem Terminal durch Umsetzung eines Algorithmus vom Typ Diffie-Hellman geteilt wird, wobei mindestens ein Datenaustausch zwischen dem Kartenleser und dem Terminal zur Umsetzung des Algorithmus das asymmetrische Verschlüsselungsprotokoll verwendet,
und wobei die mindestens einen verschlüsselten Daten aus einer zusätzlichen Verschlüsselung mithilfe des geheimen symmetrischen Schlüssels resultieren.

4. Verfahren zur Sicherung eines Empfangs, durch einen Kartenleser (110), von mindestens einem Datum, das an einem mit dem Kartenleser verbundenen Terminal (100) eingegeben wurde, wobei das mindestens eine eingegebene Datum ein persönliches Identifikationsdatum ist, das auf einem Bildschirm des Terminals eingegeben wurde, mit den folgenden Schritten, die von einem Authentifizierungsserver (140) des Kartenlesers implementiert werden:
- ein Erhalten (E300) eines Verschlüsselungsschlüssels des Terminals, des sogenannten Terminalschlüssels (100ct) ;
- eine Verschlüsselung (E310) des Terminalschlüssels mithilfe eines authentischen Verschlüsselungsschlüssels, des sogenannten authentischen Schlüssels (140ca), der zwischen dem Kartenleser und dem Authentifizierungsserver geteilt wird, wodurch einen verschlüsselten Terminalschlüssel geliefert wird;
- eine Sendung (E320) des verschlüsselten Terminalschlüssels an den Kartenleser ;
- einen Empfang (E330) eines verschlüsselten Leserschlüssels, der von dem Kartenleser gesendet wurde,
der verschlüsselte Leserschlüssel aus einer Verschlüsselung eines Verschlüsselungsschlüssels des Kartenlesers, des sogenannten Leserschlüssels (110cl), mithilfe des authentischen Schlüssels resultiert; und
- eine Übertragung (E340) des Leserschlüssels an das Terminal.

5. Verfahren nach Anspruch 4, wobei das Erhalten ein Empfangen (E300a) des Terminalschlüssels umfasst, der von dem Terminal gesendet wurde.

6. Verfahren nach Anspruch 4 oder 5, bei dem zumindest die Übertragung des Leserschlüssels und/oder der Empfang des Terminalschlüssels ein TLS-Protokoll (für "Transport Layer Security" auf Englisch) implementiert.

7. Verfahren nach einem der Ansprüche 1 bis 6, wobei der authentische Schlüssel ein grundlegender authentischer Schlüssel ist,
und wobei der Schritt des Verschlüsselns des Leserschlüssels bzw. des Terminalschlüssels umfasst :
- eine Aktualisierung (E210a, E310a) einer Schlüsselseriennummer, die eine aktualisierte Schlüsselseriennummer ausgibt; und
- eine Erzeugung (E210b, E310b) eines aktualisierten authentischen Schlüssels auf der Grundlage des grundlegenden authentischen Schlüssels und der aktualisierten Schlüsselseriennummer,
wobei der verschlüsselte Leserschlüssel bzw. der verschlüsselte Terminalschlüssel mithilfe des aktualisierten authentischen Schlüssels erzeugt wird;
und wobei der Schritt des Sendens des verschlüsselten Leserschlüssels an den Authentifizierungsserver bzw. des verschlüsselten Terminalschlüssels an den Kartenleser ein Senden (E220a, E320a) der aktualisierten Schlüsselseriennummer umfasst.

8. Verfahren nach einem der Ansprüche 1 bis 7, wobei der Schritt des Verschlüsselns des Leserschlüssels bzw. des Terminalschlüssels eine Erzeugung (E210c, E310c), mithilfe des authentischen Schlüssels oder des aktualisierten authentischen Schlüssels, eines Nachrichtenauthentifizierungscodes des Leserschlüssels bzw. des Terminalschlüssels umfasst,
und wobei der Schritt des Sendens des verschlüsselten Leserschlüssels an den Authentifizierungsserver bzw. des verschlüsselten Terminalschlüssels an den Kartenleser ein Senden (E220b, E320b) des Nachrichtenauthentifizierungscodes umfasst.

9. Verfahren nach Anspruch 8, wenn es von Anspruch 7 abhängt, wobei der Schritt des Sendens des verschlüsselten Leserschlüssels an den Authentifizierungsserver bzw. des verschlüsselten Terminalschlüssels an den Kartenleser ein Senden (E220c, E320c) des Leserschlüssels bzw. des Terminalschlüssels umfasst,
und wobei der Schritt des Empfangens des Terminalschlüssels, der durch den Authentifizierungsserver verschlüsselt wurde, bzw. des Leserschlüssels, der durch den Kartenleser verschlüsselt wurde , umfasst :
- eine Erzeugung (E230a, E330a) eines kandidaten aktualisieren authentischen Schlüssel auf der Grundlage des grundlegenden authentischen Schlüssels und der aktualisierten Schlüsselseriennummer, die von dem Authentifizierungsserver bzw. dem Kartenleser gesendet wurde;
- eine Erzeugung (E230b, E330b), mithilfe des kandidaten aktualisieren authentischen Schlüssel, eines Kandidaten-Nachrichtenauthentifizierungscodes des Terminalschlüssels, der von dem Authentifizierungsserver gesendet wurde, bzw. des Leserschlüssels, der von dem Leser gesendet wurde; und
- einen Vergleich (E230c, E330c) des Kandidaten-Nachrichtenauthentifizierungscodes und des Nachrichtenauthentifizierungscodes, die von dem Authentifizierungsserver bzw. von dem Kartenleser gesendet wurde ;
der Terminalschlüssel, der von dem Authentifizierungsserver gesendet wurde, bzw. der Leserschlüssel, der von dem Leser gesendet wurde, von dem Kartenleser bzw. dem Authentifizierungsserver akzeptiert wird, wenn der Vergleich anzeigt, dass der Kandidaten-Nachrichtenauthentifizierungscode mit dem Nachrichtenauthentifizierungscode, der von dem Authentifizierungsserver bzw. dem Kartenleser gesendet wurde, identisch ist.

10. Verfahren nach Anspruch 9, das von einem der Ansprüche 4 bis 6 abhängt, wobei der Schritt des Übertragens des Leserschlüssels an das Terminal durchgeführt wird, wenn der Vergleich anzeigt, dass der Kandidaten-Nachrichtenauthentifizierungscode mit dem Nachrichtenauthentifizierungscode, der von dem Kartenleser gesendet wurde, identisch ist.

11. Computerprogrammprodukt, das Programmcodeanweisungen zur Durchführung eines Verfahrens nach einem der Ansprüche 1 bis 10 umfasst, wenn das Programm von einem Prozessor ausgeführt wird.

12. Vorrichtung (110d) zum gesicherten Empfang, in einem Kartenleser (110), von mindestens einem Datum, das an einem mit dem Kartenleser verbundenen Terminal (100) eingegeben wurde, wobei das mindestens eine eingegebene Datum ein persönliches Identifikationsdatum ist, das auf einem Bildschirm des Terminals eingegeben wurde, umfassend eine umprogrammierbare Rechenmaschine (402) oder eine dedizierte Rechenmaschine, die konfiguriert ist, um :
- Erhalten eines Verschlüsselungsschlüssels des Kartenlesers, des sogenannten Leserschlüssels (110cl) ;
- Verschlüsseln des Leserschlüssels mithilfe eines authentischen Verschlüsselungsschlüssels, des sogenannten authentischen Schlüssels (140ca), der zwischen dem Kartenleser und einem Authentifizierungsserver (140) des Kartenlesers geteilt wird, wodurch ein verschlüsselter Leserschlüssel geliefert wird ;
- Senden des verschlüsselten Leserschlüssels an den Authentifizierungsserver zur Übertragung des Leserschlüssels vom Authentifizierungsserver an das Terminal ;
- Empfangen eines vom Authentifizierungsserver gesendeten verschlüsselten Schlüssel, den sogenannten verschlüsselten Terminalschlüssel,
wobei der verschlüsselte Terminalschlüssel aus einer Verschlüsselung eines von dem Authentifizierungsserver erhaltenen Verschlüsselungsschlüssels, den sogenannten Terminalschlüssel (100ct), mithilfe des authentischen Schlüssels resultiert; und
Empfangen mindestens eines verschlüsselten Daten, der von dem Terminal gesendet wird, der aus einer Verschlüsselung des mindestens einen Daten mit mindestens dem Leserschlüssel und dem Terminalschlüssel resultiert.

13. Vorrichtung (140d) zur Sicherung eines Empfangs, durch einen Kartenleser (110) von mindestens einem Datum, das an einem mit dem Kartenleser verbundenen Terminal (100) eingegeben wurde, wobei das mindestens eine eingegebene Datum ein persönliches Identifikationsdatum ist, das auf einem Bildschirm des Terminals eingegeben wurde, umfassend eine umprogrammierbare Rechenmaschine (502) oder eine dedizierte Rechenmaschine, die konfiguriert ist, um:
- Erhalten eines Verschlüsselungsschlüssels des Terminals, des sogenannten Terminalschlüssels (100ct) ;
- Verschlüsseln des Terminalschlüssels mithilfe eines authentischen Verschlüsselungsschlüssels, des sogenannten authentischen Schlüssels (140ca), der zwischen dem Kartenleser und dem Authentifizierungsserver des Kartenlesers geteilt wird, wodurch ein verschlüsselter Terminalschlüssel geliefert wird;
- Senden des verschlüsselten Terminalschlüssels an den Kartenleser ;
- Empfangen eines verschlüsselten Leserschlüssel, der von dem Kartenleser gesendet wird,
der verschlüsselte Leserschlüssel aus einer Verschlüsselung eines Verschlüsselungsschlüssels des Kartenlesers, des sogenannten Leserschlüssels (110cl), mithilfe des authentischen Schlüssels resultiert; und
- Übertragen an das Terminal den Leserschlüssel.

## Claims

1. Method for securely receiving, in a card reader (110), at least one piece of data entered into a terminal (110) connected to said card reader, said at least one piece of data being a piece of personal identification data entered on a screen of said terminal, comprising the following steps implemented by said card reader:
- obtaining (E200) an encipherment key of said card reader, called a reader key (110cl);
- encrypting (E210) said reader key using an authentic encipherment key, called an authentic key (140ca), shared between said card reader and an authentication server (140) of the card reader, delivering an encrypted reader key;
- sending (E220), to said authentication server, said encrypted reader key for transmission of said reader key from said authentication server to said terminal;
- receiving (E230) an encrypted key sent by said authentication server, called an encrypted terminal key,
said encrypted terminal key resulting from an encryption of an encipherment key obtained by said authentication server, called a terminal key (100ct), using said authentic key; and
- receiving (E250) at least one piece of encrypted data sent by said terminal, resulting from an encryption, using at least said reader key and said terminal key, of said at least one piece of data.

2. Method according to claim 1, wherein said reader key and said terminal key are public keys for the implementing of an asymmetric encipherment protocol between said card reader and said terminal,
said at least one piece of encrypted data resulting from an encryption implementing said asymmetric encipherment protocol.

3. Method according to claim 2 further comprising a step for obtaining (E240) at least one secret symmetrical key shared between said card reader and said terminal by implementation of a Diffie-Hellman type algorithm, at least one exchange of data between said card reader and said terminal for the implementation of the algorithm using said asymmetric encipherment protocol, and wherein said at least one piece of encrypted data results from an additional encryption by means of the secret symmetrical key.

4. Method for securing a reception, by a card reader (110), of at least one piece of data entered into a terminal connected to said card reader, said at least one piece of data being a piece of personal identification data entered on a screen of said terminal, comprising the following steps implemented by an authentication server (140) of said card reader:
- an obtaining (E300) of an encipherment key of said terminal, called a terminal key (100ct);
- an encryption (E310) of said terminal key using an authentic encipherment key, called an authentic key (140a), shared between said card reader and said authentication server, delivering an encrypted terminal key;
- a sending (E320), to said card reader, of said encrypted terminal key;
- a reception (E330) of an encrypted reader key sent by said card reader;
said encrypted reader key resulting from an encryption of an encipherment key of said card reader, called a reader key (110cl), using said authentic key; and
- a transmission (E340), to said terminal, of said reader key.

5. Method according to claim 4 wherein said obtaining comprises a reception (E300a) of said terminal key sent by said terminal.

6. Method according to claim 4 or 5 wherein at least said transmission of said reader key and/or said reception of said terminal key implements a TLS (Transport Layer Security) protocol.

7. Method according to any one of the claims 1 to 6 wherein said authentic key is a basic authentic key,
and wherein said step of encryption, of said reader key and of said terminal key respectively, comprises:
- an updating (E210a, E310a) of a key serial number delivering an updated key serial number; and
- a generation (E210b, E310b) of an updated authentic key on the basis of said basic authentic key and of said updated key serial number,
said encrypted reader key and said encrypted terminal key respectively being generated by means of said updated authentic key;
and wherein said step for sending said encrypted reader key to said authentication server and said encrypted terminal key to said card reader respectively comprises a sending (E220a, E320a) of said updated key serial number.

8. Method according to any one of the claims 1 to 7 wherein said step of encryption of said reader key and of said terminal key respectively, comprises a generation (E210c, E310c), by means of said authentic key or of said updated authentic key, of a message authentication code of said reader key and said terminal key respectively,
and wherein said step for sending said encrypted reader key to said authentication server and of said encrypted terminal key to said card reader respectively comprises a sending (E220b, E320b) of said message authentication code.

9. Method according to claim 8 in that it is dependent on claim 7 wherein said step for sending said encrypted reader key to said authentication server and of said encrypted terminal key to said card reader respectively, comprises a sending (E220c, E320c) of said reader key and of said terminal key respectively,
and wherein said step for receiving said terminal key encrypted by said authentication server and said reader key encrypted by said card reader respectively comprises:
- a generation (E230a, E330a) of a candidate updated authentic key on the basis of said basic authentic key and of said updated key serial number sent by said authentication server and by said card reader respectively;
- a generation (E230b, E330b), by means of said candidate updated authentic key, of a candidate message authentication code of said terminal key sent by said authentication server and of said reader key sent by said card reader respectively; and
- a comparison (E230c, E330c) of said candidate message authentication code and of said message authentication code sent by said authentication server and by said card reader respectively;
said terminal key sent by said authentication server and said reader key sent by said reader respectively being accepted by said card reader and by said authentication server respectively, when said comparison indicates that said candidate message authentication code is identical to said message authentication code sent by said authentication server and said card reader respectively.

10. Method according to claim 9 in that it depends on any one of the claims 4 to 6 wherein said step of transmission, to said terminal, of said reader key is implemented when said comparison indicates that said candidate message authentication code is identical to said message authentication code sent by said card reader.

11. Computer program product comprising program code instructions for implementing a method according to any one of the claims 1 to 10, when said program is executed by a processor.

12. Device (110d) for securely receiving, in a card reader (110), at least one piece of data entered on a terminal (100) connected to said card reader, said at least one piece of data being a piece of personal identification data entered on a screen of said terminal, comprising a reprogrammable computation machine (402) or a dedicated computation machine configured to:
- obtain an encipherment key of said card reader called a reader key (110cl);
- encrypt said reader key using an authentic encipherment key called an authentic key (140ca), shared between said card reader and an authentication server (140) of the card reader, delivering an encrypted reader key;
- send said encrypted reader key to said authentication server for transmission of said reader key from said authentication server to said terminal;
- receive an encrypted key sent by said authentication server, called an encrypted terminal key,
said encrypted terminal key resulting from an encryption of an encipherment key obtained by said authentication server, called a terminal key (100ct), using said authentic key; and
- receive at least one piece of encrypted data sent by said terminal, resulting from an encryption using at least said reader key and of said terminal key of said at least one piece of data.

13. Device (140d) for securing a reception, by a card reader (110), of at least one piece of data entered on a terminal (100) connected to said card reader, said at least one piece of data being a piece of personal identification data entered on a screen of said terminal, comprising a reprogrammable computation machine (502) or a dedicated computation machine configured to:
- obtain an encipherment key of said terminal, called a terminal key (100ct) ;
- encrypt said terminal key using an authentic encipherment key, called an authentic key (140ca), shared between said card reader and said authentication server, delivering an encrypted terminal key;
- send said encrypted terminal key to said card reader;
- receive an encrypted reader key sent by said card reader,
said encrypted reader key resulting from an encryption of an encipherment key of said card reader, called a reader key (110cl), using said authentic key; and
- transmit said reader key to said terminal.
